(19) Europäisches Patentamt
European Patent Office
Office européen des brevets

(11) Publication number: **0 031 310**
**B1**

(12) **EUROPEAN PATENT SPECIFICATION**

(45) Date of publication of patent specification: **01.02.84**

(51) Int. Cl.³: **B 01 F 17/34,** B 01 F 17/42

(21) Application number: **80850168.8**

(22) Date of filing: **10.11.80**

# (54) Nonionic surface active monoester and method for its production.

(30) Priority: **06.12.79 SE 7910047**

(43) Date of publication of application:
**01.07.81 Bulletin 81/26**

(45) Publication of the grant of the patent:
**01.02.84 Bulletin 84/5**

(84) Designated Contracting States:
**AT BE CH DE FR GB IT LI NL**

(56) References cited:
**DE - A - 1 911 328**
**DE - A - 2 160 698**
**DE - B - 1 277 237**
**US - A - 3 821 372**

(73) Proprietor: **BEROL KEMI AB**
**S-444 01 Stenungsund (SE)**

(72) Inventor: **Hellsten, Karl Martin Edvin**
**Värsäddsvägen 4**
**S-444 05 Ödsmäl (SE)**
Inventor: **Sköld, Rolf Olof**
**Kristinedal 77**
**S-444 00 Stenungsund (SE)**

(74) Representative: **Andersson, Rolf**
**BEROL KEMI AB Box 851**
**S-444 01 Stenungsund (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 031 310 B1

# Nonionic surface active monoester and method for its production

The present invention relates to a nonionic surface active monoester with satisfactory hydrolysis stability, particularly in an alkaline milieu, and a method for producing the monoester.

Nonionic surface active monoesters are well known and have been used commercially since the 1930s. They can be produced by reacting carboxylic acids with polyethylene glycol or by adding ethylene oxide to carboxylic acid in the presence of a basic catalyst. In both these reactions equilibrium mixtures are obtained between monoester, diester and polyethylene glycol, the monoester generally being present in a yield of only about 50%. In the majority of cases the monoester is the desired product, since it has satisfactory surface active properties, while diester and polyethylene glycol are either ineffective or have a harmful effect on the surface activity. It is therefore easy to understand that carboxylic acid polyethylene glycol esters have hitherto not been able to compete with alcohol polyethylene glycol ethers.

It is also known that monoesters can be produced from carboxylic acids by esterifying the carboxylic acids with a monoalkylether of polyethylene glycol. In this manner, monoester compounds are obtained with a good yield. This type of monoester compound has satisfactory surface active properties but has the disadvantage of being hydrolized rapidly, particularly in an alkaline milieu. This lastmentioned property must be the main reason why this type of nonionic surface active monoester has not come into commercial use, for example as a surface active component in detergents and cleaning agents.

According to the present invention it has now surprisingly been found that a certain type of nonionic surface active monoester, apart from satisfactory surface active properties also has satisfactory hydrolysis stability in an alkaline milieu. The monoester is therefore well suited for inclusion in detergents and cleaning agents. With the method according to the invention, the monoester can also be produced in much higher proportions. The monoester according to the invention has the general formula

$$R^{I}COO—B—(A)_nR^{II}$$

where $R^I$ is a hydrocarbon group with 5—23 carbon atoms, B is an oxyalkylene unit derived from propylene oxide or butylene oxide, A is an oxyalkylene unit derived from an alkylene oxide with 2—4 carbon atoms, on the condition that at least half of the A units are derived from ethylene oxide, n is an integer from 2—50 and $R^{II}$ is an alkyl group with 1—4 carbon atoms.

Particularly preferred are the compounds where $R^I$ is a hydrocarbon group with 7—19 carbon atoms and n is an integer from 3—30, while the A units consist of 90—100% of oxyethylene units, because of their generally good surface active properties.

The monoester according to the invention is produced by reacting a monoalkylether of polyalkylene glycol having the general formula

$$R^{II}(A)_nBOH$$

where $R^{II}$, A, n and B have the meanings given above, with a carboxylic acid with the formula $R^{I}COOH$, where R has the meaning given above.

In more detail, the compounds according to the invention can be produced by first alkoxylating a lower alcohol, such as methanol, ethanol, n-propanol, iso-propanol, butanol, isobutanol or tertiary butanol, in the presence of a suitable catalyst, with ethylene oxide or with ethylene oxide and propylene oxide and/or butylene oxide in one or more stages. Thereafter the alkyl ether obtained is alkoxylated with propylene oxide or butylene oxide, likewise in the presence of a suitable catalyst. The last stage can be carried out either separately or if desired following directly on the alkoxylation previously carried out. An alkali hydroxide is preferred as a catalyst for the alkoxylation but other catalysts with an acid or substantially neutral reaction can also be used. A suitable reaction temperature is 110—150°C. The compound obtained, $R^{II}(A)_nBOH$, where $R^{II}$, A, n and B have the meanings given above, is finally reacted with a carboxylic acid having the formula

$$R^{I}COOH$$

where $R^I$ has the meaning given above, at 150—220°C, in the presence with a conventional esterifying catalyst, such as sulphuric acid, toluene sulphonic acid or tetraisopropoxytitanium. Suitable carboxylic acids are, for example, 2-ethylhexanoic acid, octanoic acid, decanoic acid, dodecanoic acid, tetradecanoic acid, hexadecanoic acid, octadecanoic acid, oleic acid, ricinoleic acid, linoleic acid, linolenic acid, abietic acid and dehydroabietic acid.

The invention is further illustrated by examples.

Example 1

An autoclave provided with an agitator and devices for heating and cooling was charged with 134 g (1 mole) diethylene glycol monoethylether, $HOC_2H_4OC_2H_4OC_2H_5$, and 2 g KOH in solid form. The contents were heated to 130°C after which 352 g (8 mole) ethylene oxide, $C_2H_4O$, was introduced slowly. When the reaction was terminated after 2 hours, 116 g (2 mole) propylene oxide, $C_3H_7O$, was introduced

and likewise caused to react for 2 hours. After cooling the contents were neutralized with acetic acid. The reaction product consisted of an almost colourless clear liquid.

The monoethyl polyalkylene glycol produced above and 280 g (1 mole) of tall oil fatty acid, which consisted mainly of oleic acid, linoleic acid and linolenic acid with small amounts of fatty acids and resin acids were introduced into a retort provided with an agitator and a reflux condenser. 560 mg tetraisopropoxytitanium (0,2 mole) was also added as an esterifying catalyst. The retort was heated to 200°C during agitation and blowing through of nitrogen gas and the reaction was continued for 5 hours. Titration of the remaining free fatty acid shows that the esterification has taken place up to 98% of the theoretical amount. The final product can be illustrated by the formula

$$\text{tall oil acyloxy} -(CH_2-\underset{CH_3}{CH}-O)(CH_2-\underset{CH_3}{CH}-O)(CH_2CH_2O)_{10}C_2H_5$$

and its IR diagram is shown in Figure 1.

The reaction product consisted of a clear brown liquid with a melting point of 10°C. It forms clear solutions with water at room temperature, and the solution has a moderate foaming capacity and a satisfactory washing capacity.

The stability against hydrolysis was examined in an alkaline water solution. The pH value of the solution was kept constant on 11 by the presence of a sodium carbonate buffer. Under these conditions a half-life time of 28 hours was measured which could be compared with a half-life time of 8 hours for the corresponding fatty acid ester of ethylpolyethylene glycol. This shows that the presence of units derived from propylene oxide is of great importance to the hydrolysis rate.

Example 2

In a manner similar to that of Example 1 a monoethylpolyalkylene glycol having the general formula

$$C_2H_5(OC_2H_4)_{10}(OC_4H_8)_{1.5}OH$$

where $OC_2H_4$ and $OC_4H_8$ are groups derived from ethylene oxide and butylene oxide respectively, was reacted with tall oil fatty acid to form the compound

$$\text{tall oil fatty acyloxy-}(C_4H_8O)_{1.5}(C_2H_4O)_{10}C_2H_5$$

The stability against hydrolysis was then examined in an alkaline water solution at 60°C. The pH value of the solution was kept constant on 10 by continuous addition of NaOH. The half-life time was measured to 45 hours while the corresponding fatty acid ester of ethylpolyethylene glycol has a half-life time of 19 hours. This shows that the monoester according to the invention has an improved hydrolysis stability in comparison with the corresponding compound without units derived from butylene oxide.

## Claims

1. A nonionic surface active monoester having the general formula

$$R^{I}COO-B-(A)_nR^{II}$$

where $R^I$ is a hydrocarbon group with 5—23 carbon atoms, B is an oxyalkylene unit derived from propylene oxide or butylene oxide, A is an oxyalkylene unit derived from an alkylene oxide with 2—4 carbon atoms, on the condition that at least half of all the A units are derived from ethylene oxide, n is an integer from 2—50 and $R^{II}$ is an alkyl group with 1—4 carbon atoms.

2. A monoester according to Claim 1, characterized by $R^I$ being a hydrocarbon group with 7—19 carbon atoms and n being an integer from 3—30 and A consisting of 90—100% of oxyethylene units.

3. A monoester according to Claim 1 or 2, characterized by $R^I$ being an aliphatic hydrocarbon group.

4. A method of producing a nonionic surface active monoester according to Claim 1, wherein a carboxylic acid having the formula $R^ICOOH$, where $R^I$ has the meaning given in Claim 1, is esterified with a monoalkylether of a polyalkylene glycol having the general formula

$$R^{II}(A)_nBOH$$

where $R^{II}$, A, n and B have the meanings given in Claim 1.

5. A method according to Claim 4, characterized by $R^I$ being a hydrocarbon group with 7—19 carbon atoms and n being an integer from 3—30 and A consisting of 90—100% of oxyethylene units.

6. A method according to Claim 4 or 5, characterized by $R^I$ being an aliphatic hydrocarbon group.

7. A method according to Claim 4, 5 or 6, wherein the monoalkylether of polyalkylene glycol having the formula

$$R^{II}(A)_nBOH$$

is produced by first alkoxylating a lower alcohol having 1—4 carbon atoms with ethylene oxide or ethylene oxide and propylene oxide and/or butylene oxide in one or more stages and then alkoxylating the alkylene oxide adducts obtained with propylene oxide or butylene oxide, the amounts of ethylene oxide, propylene oxide and butylene oxide being selected so that A units consist of at least 50%, preferably 90—100% of oxyethylene units derived from ethylene oxide.

**Patentansprüche**

1. Nichtionischer grenzflächenaktiver Monoester der allgemeinen Formel

$$R^ICOO—B—(A)_nR^{II}$$

wobei $R^I$ eine Kohlenwasserstoffgruppe mit 5 bis 23 Kohlenstoffatomen ist, B eine von Propylenoxid oder Butylenoxid abgeleitete Oxyalkyleneinheit ist, A eine von einem Alkylenoxid mit 2 bis 4 Kohlenstoffatomen abgeleitete Oxyalkyleneinheit ist, mit der Bedingung, daß mindestens die Hälfte aller A-Einheiten von Ethylenoxid abgeleitet sind, n eine ganze Zahl von 2 bis 50 est und $R^{II}$ eine Alkylgruppe mit 1 bis 4 Koheln-stoffatomen ist.

2. Monoester nach Anspruch 1, dadurch gekennzeichnet, daß $R^I$ eine Kohlenwasserstoffgruppe mit 7 bis 19 Kohlenstoffatomen ist und n eine ganze Zahl von 3 bis 30 ist und A aus 90 bis 100% Oxyethyleneinheiten besteht.

3. Monoester nach Anspruch 1 oder 2, dadurch gekennzeichnet, daß $R^I$ eine aliphatische Kohlenwasserstoffgruppe ist.

4. Verfahren zur Herstellung eines nichtionischen grenzflächenaktiven Monoesters nach Anspruch 1, worin eine Carbonsäure der Formel $R^ICOOH$, wobei $R^I$ die in Anspruch 1 genannte Bedeutung hat, mit einem Monoalkylether eines Polyalkylenglykols der allgemeinen Formel

$$R^{II}(A)_nBOH$$

wobei $R^{II}$, A, n und B die in Anspruch 1 genannten Bedeutungen haben, verestert wird.

5. Verfahren nach Anspruch 4, dadurch gekennzeichnet, daß $R^I$ eine Kohlenwasserstoffgruppe mit 7 bis 19 Kohlenstoffatomen ist und n eine ganze Zahl von 3 bis 30 ist und A aus 90 bis 100% Oxyethyleneinheiten besteht.

6. Verfahren nach Anspruch 4 oder 5, dadurch gekennzeichnet, daß $R^I$ eine aliphatische Kohlenwasserstoffgruppe ist.

7. Verfahren nach Anspruch 4, 5 oder 6, worin der Monoalkylether von Polyalkylenglykol der Formel

$$R^{II}(A)_nBOH$$

hergestellt wird, indem man zuerst einen niederen Alkohol mit 1 bis 4 Kohlenstoffatomen mit Ethylenoxid oder Ethylenoxid und Propylenoxid und/oder Butylenoxid in einer oder mehreren Stufen alkoxyliert und dann die erhaltenen Alkylenoxidaddukte mit Propylenoxid oder Butylenoxid alkoxyliert, wobei die Mengen von Ethylenoxid, Propylenoxid und Butylenoxid so gewählt werden, daß die A-Einheiten aus mindestens 50%, vorzugsweise 90 bis 100% von Ethylenoxid abgeleiteten Oxyethyleneinheiten bestehen.

**Revendications**

1. Monoester tensio actif non ionique répondant à la formule générale:

$$R^ICOO—B—(A)_nR^{II}$$

dans laquelle $R^I$ est un groupe hydrocarboné comportant 5 à 23 atomes de carbone, B est un motif oxyalkylène provenant de l'oxyde de propylène ou de l'oxyde de butylène, A est un motif oxyalkylène provenant d'un oxyde d'alkylène ayant 2 à 4 atomes de carbone, à la condition qu'au moins la moitié de tous les motifs A provienne de l'oxyde d'éthylène, n est un nombre entier valant de 2 à 50 et $R^{II}$ est un groupe alkyle ayant 1 à 4 atomes de carbone.

2. Monoester selon la revendication 1, caractérisé en ce que $R^I$ est un groupe hydrocarboné ayant 7 à 19 atomes de carbone, n est un nombre entier valant 3 à 30 et A consiste en 90 à 100% de motifs oxyéthyléniques.

3. Monoester selon les revendications 1 ou 2, caractérisé en ce que $R^I$ est un groupe hydrocarboné aliphatique.

4. Procédé de préparation d'un monoester tensio-actif non ionique selon la revendication 1, caractérisé en ce qu'on estérifie un acide carboxylique de formule $R^ICOOH$ (dans laquelle $R^I$ a la signification indiquée à la revendication 1) à l'aide d'un éther monoalkylique d'un polyalkylène-glycol de formule générale:

$$R^{II}(A)_nBOH$$

dans laquelle $R^{II}$, A, n et B ont les significations indiquées dans la revendication 1.

5. Procédé selon la revendication 4, caractérisé en ce que $R^I$ est un groupe hydrocarboné ayant 7 à 19 atomes de carbone, n est un nombre entier valant 3 à 30 et A consiste en 90 à 100% de motifs oxyéthyléniques.

6. Procédé selon les revendications 4 ou 5, caractérisé en ce que $R^I$ est un groupe hydrocarboné aliphatique.

7. Procédé selon l'une des revendications 4, 5 ou 6, caractérisé en ce que l'on prépare l'éther monoalkylique de polyalkylène-glycol de formule:

$$R^{II}(A)_nBOH$$

en alcoxylant tout d'abord un alcool inférieur comportant 1 à 4 atomes de carbone à l'aide d'oxyde d'éthylène ou d'oxyde d'éthylène et d'oxyde de propylène et/ou d'oxyde de butylène en une ou plusieurs étapes puis en alcoxylant, à l'aide d'oxyde de propylène ou d'oxyde de butylène, les produits d'addition d'oxyde d'alkylène obtenus, les quantités d'oxyde d'éthylène, d'oxyde de propylène et d'oxyde de butylène étant choisies de façon que les motifs A consistent en au moins 50%, de preférence en 90 à 100% de motifs oxyéthyléniques provenant de l'oxyde d'éthylène.

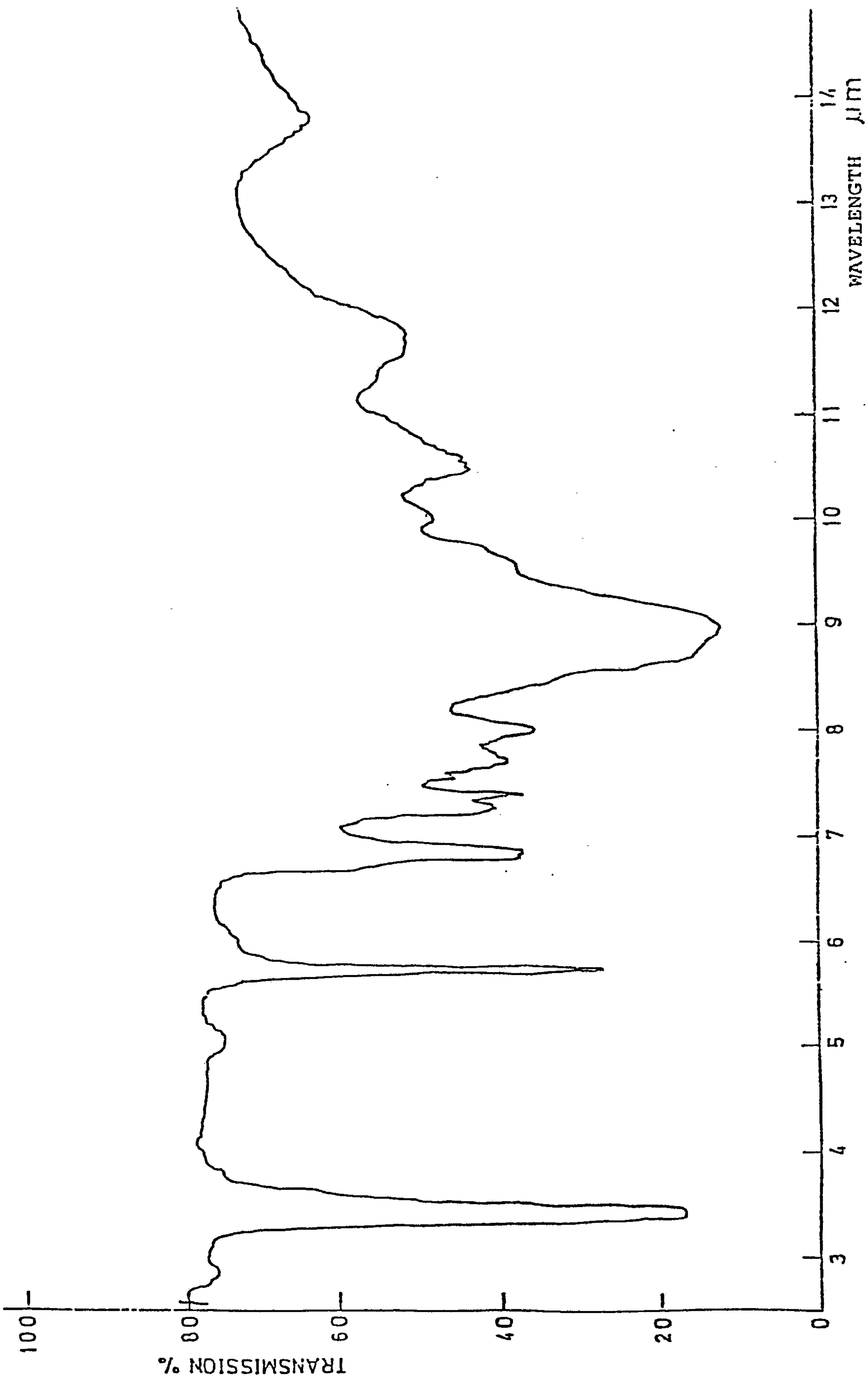

TRANSMISSION %
100
80
60
40
20
0
WAVELENGTH
μm
3
4
5
6
7
8
9
10
11
12
13
14